# EUROPÄISCHE PATENTSCHRIFT

(11) **EP 2 007 610 B1**
(45) Veröffentlichungstag und Bekanntmachung des Hinweises auf die Patenterteilung: **28.10.2015**
(21) Anmeldenummer: 07722237.0
(22) Anmeldetag: 17.04.2007
(51) Int. Cl.: B60R 25/02, B60R 25/0215, B60R 25/20, B60R 25/24

(54) **ELEKTRISCHE LENKUNGSVERRIEGELUNG, INSBESONDERE FÜR EIN KRAFTFAHRZEUG**
ELECTRIC STEERING LOCK, IN PARTICULAR FOR A MOTOR VEHICLE
VERROUILLAGE ÉLECTRIQUE DE DIRECTION, EN PARTICULIER POUR UN VEHICULE AUTOMOBILE

(30) Priorität: 18.04.2006 DE 102006018175
(43) Veröffentlichungstag der Anmeldung: 31.12.2008
(73) Patentinhaber: Marquardt GmbH, 78604 Rietheim-Weilheim (DE); Volkswagen Aktiengesellschaft, 38440 Wolfsburg (DE)
(72) Erfinder: MÜLLER, Karl, 78628 Rottweil-Neufra (DE); STAUSS, Gerd, 72488 Sigmaringen (DE); MAIER, Ralf, 78606 Seitingen-Oberflacht (DE); BORNGRÄBER, Ralf, 38165 Lehre (DE); THIELE, Andreas, 38442 Wolfsburg (DE); GRAVE, Dietmar, 38527 Meine (DE); REVERMANN, Klaus, 38440 Wolfsburg (DE); TITZE, Andreas, Stapeley Nantwich, CW5 7J1 (GB)
(74) Vertreter: Otten, Herbert
(86) Internationale Anmeldenummer: PCT/DE2007/000679
(87) Internationale Veröffentlichungsnummer: WO 2007/118469

(56) Entgegenhaltungen:
- EP-A- 1 072 487
- EP-A1- 1 504 972

## Beschreibung

Die Erfindung betrifft eine elektrische Lenkungsverriegelung nach dem Oberbegriff des Patentanspruchs 1.

Derartige Lenkungsverriegelungen dienen zum Verriegeln der Lenksäule in einem Kraftfahrzeug, um den Diebstahlschutz zu erhöhen.

Aus der DE 37 39 172 C1 oder der EP 1 072 487 A1 ist eine elektrische Lenkungsverriegelung für ein Fahrberechtigungssystem in einem Kraftfahrzeug bekannt, die ein zwischen einer ersten und einer zweiten Position bewegbares Sperrglied zur Verriegelung der Lenkwelle bei abgezogenem Schlüssel aufweist. Das Sperrglied ist in der ersten Position in verriegelnden Eingriff mit einer Einrastposition an der Lenkwelle in der Lenkradsäule bringbar und steht in der zweiten Position außer Eingriff mit der Einrastposition. Die Lenkungsverriegelung besitzt einen einen Elektromotor aufweisenden, von der Batterie im Kraftfahrzeug mit elektrischer Spannung versorgten Antrieb für die Bewegung des Sperrglieds.

Für die elektrische Lenkungsverriegelung ist ein zusätzliches Steuergerät notwendig. Üblicherweise handelt es sich dabei um ein Zündschloss, bei dessen Betätigung durch den zugehörigen Schlüssel der Antrieb zur Ver- und/oder Entriegelung der Lenkungsverriegelung angesteuert wird.

Solche Fahrberechtigungssysteme sind auch mit sogenannten "Keyless"-Funktionalitäten weiterentwickelt (vgl. EP 1 504 972 A1). So wird bei der "KeylessGo"-Funktionalität ein Betriebssignal für die Fahrberechtigung zwischen einer als elektronischer Schlüssel ausgebildeten Einrichtung und dem Steuergerät selbsttätig übertragen, wenn der Benutzer sich innerhalb des Kraftfahrzeugs befindet und beispielsweise eine Start/Stop-Taste im Armaturenbrett betätigt. Bei berechtigter Einrichtung ist dann der Antrieb für die Bewegung des Sperrglieds in die jeweilige Position ansteuerbar.

Der Erfindung liegt die Aufgabe zugrunde, die elektrische Lenkungsverriegelung für ein Fahrberechtigungssystem mit Keyless-Funktionalität, derart auszugestalten, dass auf ein zusätzliches Steuergerät verzichtet werden kann.

Diese Aufgabe wird bei einer gattungsgemäßen elektrischen Lenkungsverriegelung durch die kennzeichnenden Merkmale des Anspruchs 1 gelöst.

Von der Elektronik der erfindungsgemäßen Lenkungsverriegelung sind die für die Fahrberechtigung erforderlichen Signale erzeugbar. Die elektrische Lenkungsverriegelung erzeugt derartige Signale, die zur Auslösung von ansonsten von einem elektrischen Zündschloss, das Bestandteil eines herkömmlichen Fahrberechtigungssystems ist, bewirkbaren Funktionen dienen. Das Fahrberechtigungssystem benötigt somit kein zusätzliches Steuergerät zur Generierung der für den Betrieb des Kraftfahrzeugs notwendigen Signale. Ergänzend oder auch alternativ steuert die Elektronik den Antrieb autonom in eigensicherer Art an, womit ein selbständiger Betrieb der Lenkungsverriegelung ohne ein zusätzliches Steuergerät ermöglicht ist. Dabei ist auch die Erfüllung der üblichen Sicherheitsanforderungen ohne Überwachung durch ein zusätzliches Steuergerät sichergestellt.

Vorteilhafterweise sind in dem Basisfahrzeug keine Aufwendungen zur Ausrüstung mit KeylessGo notwendig. Daher ist ein KeylessGo-System bei der Erfindung geschaffen, das durch den Ersatz einer Komponente oder durch Hinzufügen von Komponenten unter Beibehaltung der Schnittstellen vom Basisfahrzeug in das mit Keyless-Funktionalität zu versehende Fahrzeug eingebaut werden kann.

Weitere Ausgestaltungen der Erfindung sind Gegenstand der Unteransprüche.

In einer weiteren Ausgestaltung generiert die Elektronik entsprechend dem Betriebsablauf die ansonsten bei manueller Bedienung mittels des Zündschlüssels von beispielsweise elektrischen Schaltern im Zündschloss abgegebenen Schlüsselpositionssignale. Dadurch bietet die Lenkungsverriegelung eine Art von Schlüsselnachbildung des elektrischen Zündschlosses, indem diese Signale in der elektrischen Lenkungsverriegelung selbst erzeugt werden. Diese Signale bewirken dann sowohl die Klemmensteuerung als auch eine Verblockung der Verriegelungssteuerung. Ergänzend oder auch alternativ steuert die Elektronik den Antrieb entsprechend dem Betriebsablauf selbständig, ohne dass die ansonsten vom Zündschloss abgegebenen Signale notwendig sind.

Zur Feststellung der Fahrberechtigung sind elektromagnetische Signale zwischen der beim Benutzer befindlichen, beispielsweise als elektronischer Schlüssel ausgebildeten Einrichtung und dem Kraftfahrzeug austauschbar. Hierfür besitzen die Elektronik sowie die Einrichtung zu deren bestimmungsgemäßen Betrieb Sender und/oder Empfänger. Falls gewünscht, kann die Elektronik zu diesem Zweck auch mit einem in einem separaten Steuergerät im Kraftfahrzeug befindlichen Sender und/oder Empfänger zusammenwirken. Bei wenigstens einem der übertragenen Signale kann es sich um ein codiertes Betriebssignal zur Authentikation der Einrichtung handeln. Nach positiver Auswertung des übertragenen Betriebssignals, d.h. der elektronische Schlüssel ist berechtigt, wird dann der Antrieb für die Bewegung des Sperrglieds in die jeweilige Position von der Elektronik angesteuert.

Um eine kompakte Anordnung zu erhalten, bietet es sich an, die Elektronik sowie gegebenenfalls den zugehörigen Sender und/oder Empfänger in der elektrischen Lenkungsverriegelung zu integrieren. Eine derartige Ausgestaltung ist für enge Einbauräume in Kraftfahrzeugen geeignet.

Mit dem Sender und/oder Empfänger für die elektrische Lenkungsverriegelung steht eine Antenne zur Übertragung der Signale in Verbindung. Insbesondere kann diese Antenne mit einer geeigneten Vorrichtung zur Steuerung der Niederfrequenz(LF)-Signale zum Wecken und/oder zur Ortung der Einrichtung ausgestattet sein. Falls zur Reduzierung des Bauraums gewünscht, lässt sich auch die Antenne in die elektrische Lenkungsverriegelung integrieren.

Der Antrieb für die Lenkungsverriegelung kann einen Elektromotor aufweisen. Zweckmäßigerweise wird der Elektromotor von der Batterie im Kraftfahrzeug mit elektrischer Spannung versorgt.

Zur Auslösung des Fahrbetriebs des Kraftfahrzeugs durch den Benutzer steht zweckmäßigerweise ein mit der Elektronik zusammenwirkender Start-Stop-Taster mit der elektrischen Lenkungsverriegelung in Verbindung. Um Platz einzusparen, bietet es sich an, den Start-Stop-Taster in demjenigen Bauraum des Kraftfahrzeugs anzuordnen, in dem ansonsten der Schließzylinder des Zündschlosses befindlich ist. Vorteilhafterweise ist somit für den Benutzer die Anordnung im wesentlichen in herkömmlicher Weise bedienbar. Zudem ist das Basisfahrzeug in kostengünstiger Weise mit der Sonderausstattung Keyless-Funktionalität zu versehen.

Es bietet sich weiterhin an, das erfindungsgemäße Fahrberechtigungssystem mit einem Zugangsberechtigungssysem für das Kraftfahrzeug, das ebenfalls mit einer Art von KeylessEntry-Funktionalität ausgestattet ist, zu erweitern. Hierfür wirkt zweckmäßigerweise die elektrische Lenkungsverriegelung mit dem Zugangsberechtigungssysem zusammen, was wiederum zur Einsparung von entsprechenden Steuergeräten beiträgt.

Zusammenfassend kann für eine bevorzugte Ausgestaltung gesagt werden, daß eine eigensichere elektrische Lenkungsverriegelung geschaffen ist, die die Position des Schlüssels über die Schaltersignale des Basisfahrzeugs nachbildet. Diese elektrische Lenkungsverriegelung ist im Bauraum der ansonsten vorhandenen mechanischen Verriegelung des Basisfahrzeugs realisiert. Die Schnittstellen zur Lenkung sind identisch zur mechanischen Verriegelung.

Die elektrische Lenkungsverriegelung kann auch durch eine mechanische Verriegelung mit Drehsperre ersetzt werden, indem die Drehsperrenelektronik die Schnittstellen von der elektrischen Lenkungsverriegelung einhält. Die Ansteuerung der induktiven Antennen erfolgt durch ein zusätzliches Steuergerät oder eine sogenannte "intelligente" Antenne. Die Keyless-Abläufe sind in der elektrischen Lenkungsverriegelung umgesetzt.

Die mit der Erfindung erzielten Vorteile bestehen insbesondere darin, daß ein kostengünstiges Keyless-System geschaffen ist. Die elektrische Lenkungsverriegelung ist im Sinne einer Zusatzausstattung austauschbar gegen eine herkömmliche mechanische Lenkungsverriegelung. Dabei sind keine kostenrelevanten Änderungen am Basisfahrzeug notwendig, um ein Keyless-Fahrzeug zu realisieren.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild des Schließsystems mit einem Diagramm zur Übertragung der Signale,
- Fig. 3: ein Blockschaltbild einer im Schließsystem angeordneten elektrischen Lenkungsverriegelung und
- Fig. 4: das nähere Schaltbild der Lenkungsverriegelung aus Fig. 3.

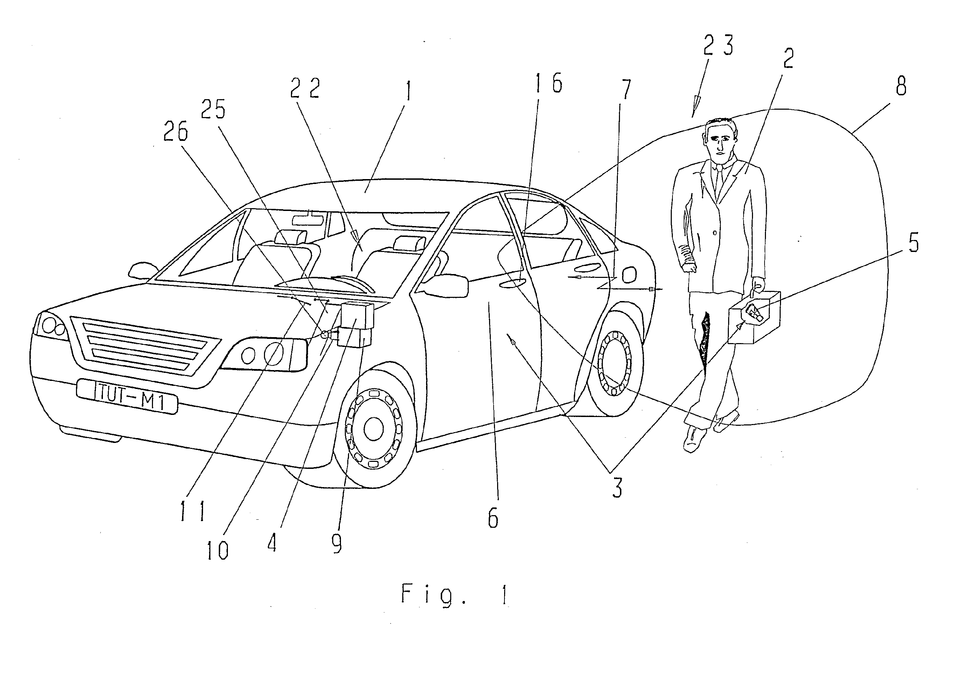

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine erste Einrichtung 4 in der Art einer Steuereinrichtung und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

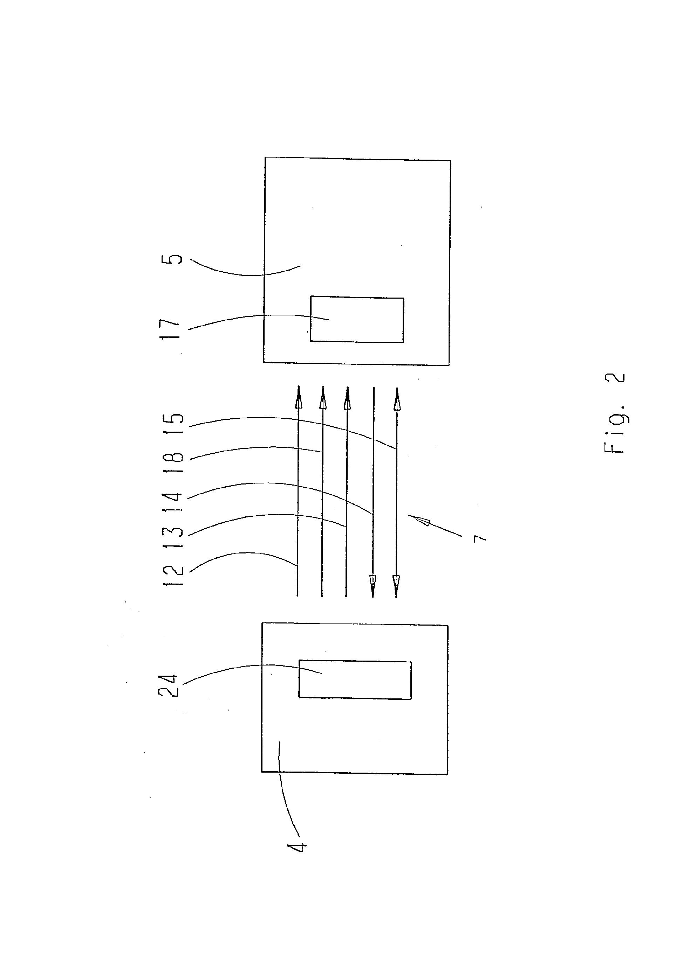

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 2). Das codierte Betriebssignal 15 dient zur Authentikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der bedienungsunabhängigen KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

Im übrigen ist neben der KeylessEntry-Funktionalität auch noch eine fernbedienbare Entsowie Verriegelung der Autotüren 6 möglich, die mittels in der Art von Tasten ausgestalteten Betätigungsorgane an der zweiten Einrichtung 5 durch den Benutzer 2 auslösbar ist, um dem Benutzer 2 eine bedienungsabhängige Zugangsberechtigung zum Kraftfahrzeug 1 zu gestatten. Beispielsweise läßt sich durch manuelle Betätigung der Betätigungsorgane die Zentralverriegelung für die Autotüren 6 ver- und/oder entsperren sowie der Kofferraumdeckel öffnen, indem entsprechende codierte Betriebssignale 15 von der zweiten Einrichtung 5 zur ersten Einrichtung 4 gesendet werden.

Das Schließsystem 3 stellt weiterhin die Fahrberechtigung für das Kraftfahrzeug 1 fest. Hierzu bewirkt die erste Einrichtung 4 ebenfalls entsprechend den beiden Zuständen die Ent- und/oder Verriegelung der in Fig. 1 schematisch angedeuteten elektrischen Lenkungsverriegelung 9. Ebensogut kann ein sonstiges funktionsrelvantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentikation der zweiten Einrichtung 5 erfolgt dann, wenn der berechtigte Benutzer 2 sich im Kraftfahrzeug 1 befindet und einen Start/Stop-Schalter 11 betätigt. Dadurch wird der Start-Vorgang o. dgl. des Kraftfahrzeugs 1 entsprechend der KeylessGo-Funktionalität ausgelöst.

Die Funktionsweise entsprechend der Keyless-Funktionalitäten des erfindungsgemäßen Schließsystems 3 soll nun anhand der Fig. 2 näher erläutert werden. Zunächst sendet die erste Einrichtung 4 mittels eines Senders/Empfängers 24 als Mittel zum Senden und/oder Empfangen von Signalen ein als Wecksignal bezeichnetes erstes elektromagnetisches Signal 12 für die zugehörige zweite Einrichtung 5. Dadurch wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres, drittes elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Nachfolgend sendet die zweite Einrichtung 5 mittels eines Senders/Empfängers 17 ein die Information zum ermittelteten Standort beinhaltendes viertes Signal 14 zur ersten Einrichtung 4, das im folgenden auch als Rückantwortsignal bezeichnet ist. Schließlich wird dann, wie bereits beschrieben, das fünfte elektromagnetische Signal als codiertes elektromagnetisches Betriebssignal 15 zur Authentikation mittels der Sender/Empfänger 24, 17 zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Das Wecksignal 12 kann beispielsweise eine Kennung zum Kraftfahrzeug-Typ enthalten. Nach Empfang des Wecksignals 12 sind zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 13 ein zweites elektromagnetisches Signal 18 zur zweiten Einrichtung 5 als Selektionssignal, wie näher anhand von Fig. 2 zu erkennen ist. Das zweite Signal 18 enthält eine Information über die nähere Identität des Kraftfahrzeugs 1. Dadurch wird bewirkt, daß lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

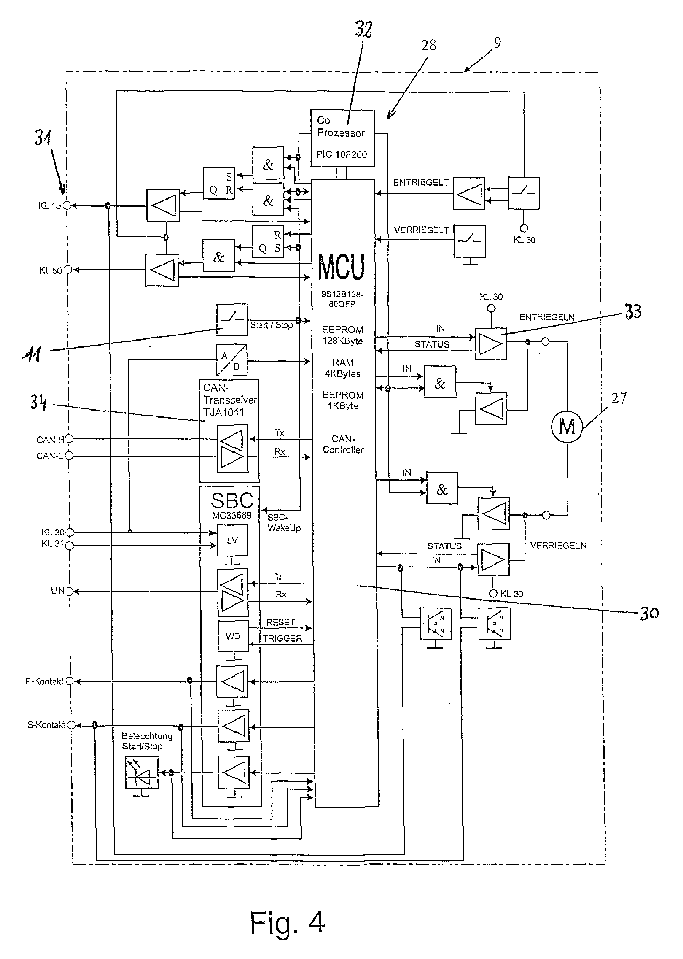

Die in Fig. 1 schematisch gezeigte elektrische Lenkungsverriegelung 9 besitzt ein bewegbares Sperrglied 10, das entsprechend einer ersten Position in sowie entsprechend einer zweiten Position außer verriegelnden Eingriff mit einer Einrastposition 26 an der Lenkwelle 25 in der Lenkradsäule bringbar ist. Wie näher aus Fig. 4 hervorgeht, weist die Lenkungsverriegelung 9 einen beispielsweise aus einem Elektromotor bestehenden Antrieb 27 für die Bewegung des Sperrglieds 10 zwischen den beiden Positionen auf. Der Antrieb 27 wird von der Batterie im Kraftfahrzeug 1 mit elektrischer Spannung versorgt. Desweiteren ist in der Lenkungsverriegelung 9 eine Elektronik 28 für die Ansteuerung des Antriebs 27 angeordnet. Bei berechtigter zweiter Einrichtung 5 ist der Antrieb 27 für die Bewegung des Sperrglieds 10 in die jeweilige Position, zumindest jedoch in die zweite, unverriegelnde Position, von der Elektronik 28 ansteuerbar.

Die Elektronik 28 umfaßt einen Mikroprozessor 30, der die Betriebsabläufe der elektrischen Lenkungsverriegelung 9 entsprechend steuert. Zum einen sind von der Elektronik 28 damit die für die Fahrberechtigung erforderlichen Signale erzeugbar, welche an entsprechenden, mit KL.(Klemme) 15, KL. 50 usw. bezeichneten Ausgängen 31 der Lenkungsverriegelung 9 bereitgestellt werden. Zum anderen ist, wie der Fig. 4 zu entnehmen ist, die elektrische Lenkungsverriegelung 9 ein weitgehend abgeschlossenes, selbständig sowie ohne Mitwirkung eines weiteren Steuergeräts arbeitendes System, so daß die Elektronik 28 den Antrieb 27 mittels entsprechender Treiber 33 autonom ansteuert. Desweiteren arbeitet mit dem Mikroprozessor 30 ein Coprozessor 32 in der Elektronik 28 redundant zusammen, um die Erfüllung der Sicherheitskriterien zu gewährleisten. Somit handelt es sich um eine in eigensicherer Art ausgestaltete Lenkungsverriegelung 9. Schließlich besitzt die elektrische Lenkungsverriegelung 9 auch einen BUS-Baustein 34, um die Kommunikation über das BUS-System im Kraftfahrzeug 1 zu gestatten.

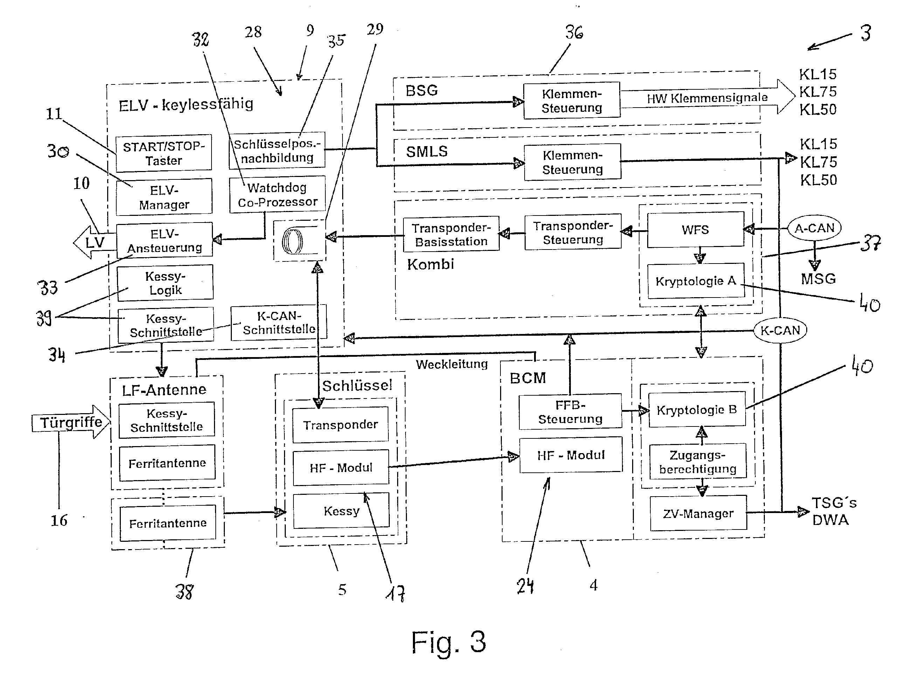

In Fig. 3 ist die Anordnung der eigensicher arbeitenden elektrischen Lenkungsverriegelung 9 im Schließsystem 3 näher zu sehen.

In der Elektronik 28 der Lenkungsverriegelung 9 werden derartige Signale erzeugt, die zur Auslösung von ansonsten von einem elektrischen Zündschloß bewirkbaren Funktionen dienen. Es werden in der Elektronik 28 gemäß Fig. 3 somit die Klemmensignale des Zündschlosses nachgebildet, beispielsweise die sogenannte Klemme 15, Klemme 50 etc., die das Einschalten von elektrischen Verbrauchern, wie das Autoradio o. dgl. freigeben. Die Elektronik 28 generiert die Schlüsselpositionssignale 35, wobei eine Nachbildung der Positionsschalter über elektrische Signale erfolgt, die dann an die Klemmensteuerung 36 weitergegeben werden. Der Antrieb 27 wird mittels des Mikroprozessors 30 sowie des Coprozesors 32 selbständig und somit ohne die ansonsten vom Zündschloß abgegebenen Signale über die Treiber 33 betrieben, womit die Keyless-Steuerung in der elektrischen Lenkungsverriegelung 9 autonom erfolgt. Das bisherige mechanische Zündschloß wird folglich von der elektrischen Lenkungsverriegelung 9 ersetzt, ohne daß sonstige Anpassungen am Kraftfahrzeug 1 erforderlich sind. Insgesamt ist somit eine Eigensicherheit, insbesondere eine Redundanz der Motoransteuerung für das Sperrglied 10, bei der Lenkungsverriegelung 9 gewährleistet.

Wie bereits erwähnt, wirken die Elektronik 28 sowie die zweite Einrichtung 5 mit Sender und/oder Empfänger 24, 17 für elektromagnetische Signale 7 zu deren bestimmungsgemäßen Betrieb zusammen. Im bestimmungsgemäßen Betrieb, insbesondere für das codierte Betriebssignal 15, wird die Generierung der Zufallszahlen sowie die Steuerung des kryptologischen Ablaufs 40 von den beiden Einrichtungen 4, 5 vorgenommen. Dabei kann die erste Einrichtung 4 in entsprechender Weise mit dem Kombiinstrument 37 im Kraftfahrzeug 1 zusammenwirken.

Neben der Elektronik 28 kann, falls gewünscht, auch der zugehörige Sender und/oder Empfänger 24 in der elektrischen Lenkungsverriegelung 9 integriert sein, was jedoch in Fig. 3 nicht weiter gezeigt ist. Desweiteren kann eine Antenne 38 zur Steuerung der Niederfrequenz(LF)-Signale zum Wecken und/oder zur Ortung der zweiten Einrichtung 5 mit der elektrischen Lenkungsverriegelung 9 über entsprechende Antennenschnittstellen 39 in Verbindung stehen, gewünschtenfalls auch in diese integriert sein. Darüberhinaus kann eine Signalübertragung auch mittels eines als eine Art von Antenne dienenden Transponders 29 vorgesehen sein. Der mit der Elektronik 28 zusammenwirkende Start-Stop-Taster 11 ist bevorzugterweise in demjenigen Bauraum des Kraftfahrzeugs 1 angeordnet, in dem ansonsten der Schließzylinder des nunmehr entfallenen elektrischen Zündschlosses befindlich ist. Schließlich stellt das Schließsystem 3 gemäß Fig. 3 auch die über die Türgriffe 16 vermittelte Zugangsberechtigung in einer Art von KeylessEntry-Funktionalität im Kraftfahrzeug 1 bereit.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann eine erfindungsgemäße Lenkungsverriegelung 9 auch an sonstigen Fahrzeugen, wie Motorräder, Baumaschinen, Wasserfahrzeugen o. dgl. Verwendung finden.

### Bezugszeichen-Liste:

- 1:: Kraftfahrzeug
- 2:: (berechtigter) Benutzer
- 3:: Schließsystem
- 4:: (erste) Einrichtung
- 5:: (zweite) Einrichtung / elektronischer Schlüssel
- 6:: Autotüre
- 7:: Signal
- 8:: Wirkbereich
- 9:: (elektrische) Lenkungsverriegelung
- 10:: Sperrglied
- 11:: Start/Stop-Schalter
- 12:: (erstes) Signal / Wecksignal
- 13:: (drittes) Signal / Bereichsabgrenzungssignal
- 14:: (viertes) Signal / Rückantwortsignal
- 15:: (fünftes) Signal / (codiertes) Betriebssignal / Code
- 16:: Türgriff
- 17:: Sender/Empfänger (in der zweiten Einrichtung)
- 18:: (zweites) Signal / Selektionssignal
- 22:: Innenraum (vom Kraftfahrzeug)
- 23:: Außenraum (vom Kraftfahrzeug)
- 24:: Sender/Empfänger (in der ersten Einrichtung)
- 25:: Lenkwelle
- 26:: Einrastposition (an Lenkwelle)
- 27:: Antrieb
- 28:: Elektronik
- 29:: Transponder
- 30:: Mikroprozessor
- 31:: Ausgang (für Fahrberechtigungssignal)
- 32:: Coprozessor
- 33:: Treiber
- 34:: BUS-Baustein
- 35:: Schlüsselpositionssignal
- 36:: Klemmensteuerung
- 37:: Kombiinstrument
- 38:: Antenne
- 39:: Antennenschnittstelle
- 40:: kryptologischer Ablauf

## Patentansprüche

1. Elektrische Lenkungsverriegelung für ein Fahrberechtigungssystem mit einer Art von KeylessGo-Funktionalität bei einem Kraftfahrzeug (1), mit einem bewegbaren Sperrglied (10), das entsprechend einer ersten Position in sowie entsprechend einer zweiten Position außer verriegelnden Eingriff mit einer Einrastposition (26) an der Lenkwelle (25) in der Lenkradsäule bringbar ist, mit einem Antrieb (27) für die Bewegung des Sperrglieds (10) zwischen den beiden Positionen, und mit einer Elektronik (28) für die Ansteuerung des Antriebs (27), wobei eine in der Art eines elektronischen Schlüssels, eines Identifikations(ID)-Gebers oder einer Chipkarte ausgebildete Einrichtung (5) vorgesehen ist, so dass bei berechtigter Einrichtung (5) der Antrieb (27) für die Bewegung des Sperrglieds (10) zumindest in die zweite Position von der Elektronik (28) ansteuerbar ist, **dadurch gekennzeichnet, dass** von der Elektronik (28) die für die Fahrberechtigung erforderlichen Signale erzeugbar sind, wobei die Elektronik (28) derartige Signale erzeugt, die zur Auslösung von ansonsten von einem einen Bestandteil eines herkömmlichen Fahrberechtigungssystems bildenden elektrischen Zündschloss bewirkbaren Funktionen dienen.

2. Elektrische Lenkungsverriegelung nach Anspruch 1, **dadurch gekennzeichnet, dass** die Elektronik (28) die ansonsten bei manueller Bedienung mittels des Zündschlüssels vom Zündschloss abgegebenen Schlüsselpositionssignale (35) nachbildet und/oder die Elektronik (28) den Antrieb (27) ohne die ansonsten vom Zündschloss abgegebenen Signale steuert und/oder die Elektronik (28) den Antrieb (27) autonom in eigensicherer Art ansteuert.

3. Elektrische Lenkungsverriegelung nach Anspruch 1 oder 2, **dadurch gekennzeichnet, daß** die Elektronik (28) sowie die Einrichtung (5) zu deren bestimmungsgemäßen Betrieb Sender und/oder Empfänger (24, 17) für insbesondere elektromagnetische Signale (7) besitzen und/oder mit, gegebenenfalls in einem separaten Steuergerät befindlichen, Sender und/oder Empfänger (24) zusammenwirken, wobei es sich insbesondere bei wenigstens einem der übertragenen Signale um ein codiertes Betriebssignal (15) zur Authentikation der Einrichtung (5) handelt, so daß nach positiver Auswertung des übertragenen Betriebssignals (15) der Antrieb (27) für die Bewegung des Sperrglieds (10) in die jeweilige Position von der Elektronik (28) angesteuert wird.

4. Elektrische Lenkungsverriegelung nach Anspruch 1, 2 oder 3, **dadurch gekennzeichnet, daß** die Elektronik (28), gegebenenfalls mit zugehörigem Sender und/oder Empfänger (24), in der elektrischen Lenkungsverriegelung (9) integriert ist.

5. Elektrische Lenkungsverriegelung nach einem der Ansprüche 1 bis 4, **dadurch gekennzeichnet, daß** eine Antenne (38, 29), insbesondere zur Steuerung der Niederfrequenz(LF)-Signale zum Wecken und/oder zur Ortung der Einrichtung (5), mit der elektrischen Lenkungsverriegleung (9) in Verbindung steht, gegebenenfalls in die elektrische Lenkungsverriegelung (9) integriert ist.

6. Elektrische Lenkungsverriegelung nach einem der Ansprüche 1 bis 5, **dadurch gekennzeichnet, daß** der Antrieb (27) einen Elektromotor aufweist, der von der Batterie im Kraftfahrzeug (1) mit elektrischer Spannung versorgt wird.

7. Elektrische Lenkungsverriegelung nach einem der Ansprüche 1 bis 6, **dadurch gekennzeichnet, daß** ein mit der Elektronik (28) zusammenwirkender Start-Stop-Taster (11) mit der elektrischen Lenkungsverriegelung (9) in Verbindung steht, insbesondere in demjenigen Bauraum des Kraftfahrzeugs (1) angeordnet ist, in dem ansonsten der Schließzylinder des Zündschlosses befindlich ist.

8. Elektrische Lenkungsverriegelung nach einem der Ansprüche 1 bis 7, **dadurch gekennzeichnet, daß** die elektrische Lenkungsverriegelung (9) mit einem Zugangsberechtigungssystem, insbesondere mit einer Art von KeylessEntry-Funktionalität im Kraftfahrzeug (1) zusammenwirkt.

## Claims

1. Electric steering lock for a drive authorisation system with a type of keylessentry functionality for a motor vehicle (1), with a movable locking member (10) which, in a first position, can be brought into locking engagement with a corresponding locking position (26) on the steering shaft (25) in the steering column, while, in a second position, it can be brought out of the said locking engagement, wherein a drive (27) moves the locking member (10) between the two positions, and with electronics (28) for the control of the drive (27), wherein a device (5) comprising an identification (ID) encoder or a chip card is provided in a type of electronic key so that when the device (5) is authorised, the drive (27) for the movement of the locking member (10) can at least be directed to the second position of the electronics (28), **characterised in that** the authorisation signals required for the driving can be generated by the electronics (28), wherein the electronics (28) generate signals used by a component of a conventional drive authorisation system to trigger functions of the electric ignition lock.

2. Electric steering lock according to claim 1, **characterized in that** the electronics (28) reproduce the key position signals (35) otherwise produced through manual operation of the ignition lock by means of the ignition key, and/or the electronics (28) control the drive (27) without the signals otherwise produced through the ignition lock, and/or the electronics (28) control the drive (27) autonomously in an intrinsically safe manner.

3. Electric steering lock according to claim 1 or 2, **characterised in that** the electronics (28) as well as the device (5) comprise a transmitter and/or receiver (24, 17) for their intended operation for, in particular, electromagnetic signals (7), and/or interacting with a transmitter and/or receiver (24), optionally located in a separate control unit, wherein, for authentication of the device (5), in particular, at least one of the transmitted signals is a coded operating signal (15) so that, after positive evaluation of the transmitted operating signal (15), the drive (27) is controlled by the electronics (28) to move the locking member (10) into the respective position.

4. Electric steering lock according to claim 1, 2 or 3, **characterised in that** the electronics (28), optionally with an associated transmitter and/or receiver (24), are integrated in the electric steering lock (9).

5. Electric steering lock according to any one of the claims 1 to 4, **characterised in that** an antenna (38, 29), in particular for controlling the low-frequency (LF) signals in order to wake and/or to locate the device (5), is connected with the electric steering lock (9), and is optionally integrated into the electric steering lock (9).

6. Electric steering lock according to one of the claims 1 to 5, **characterised in that** the drive (27) comprises an electric motor, which is supplied with electric voltage from the battery in the motor vehicle (1).

7. Electric steering lock according to any one of the claims 1 to 6, **characterised in that** a start-stop button (11) interacting with the electronics (28), is connected with the electric steering lock (9) and is arranged, in particular, in the space of the motor vehicle (1) in which the locking cylinder of the ignition lock is located.

8. Electric steering lock according to any one of the claims 1 to 7, **characterised in that** the electric steering lock (9) interacts with a conditional access system, in particular a type of keyless-entry functionality in the motor vehicle (1).

## Revendications

1. Verrouillage de direction électrique pour un système d'autorisation de conduite ayant un type de fonctionnalité de démarrage sans clé sur un véhicule (1), comprenant un élément de blocage mobile (10) qui peut être amené, dans une première position, en prise de verrouillage et, dans une deuxième position, en dehors de la prise de verrouillage avec une position d'enclenchement (26) sur l'arbre de direction (25) dans la colonne de direction, comprenant un entraînement (27) pour le déplacement de l'élément de blocage (10) entre les deux positions, et comprenant un dispositif électronique (28) pour la commande de l'entraînement (27), un dispositif (5) réalisé à la manière d'une clé électronique, d'un générateur d'identification (ID) ou d'une carte à puce étant prévu, de telle sorte qu'avec le dispositif (5) autorisé, l'entraînement (27) peut être commandé par le dispositif électronique (28) pour déplacer l'élément de blocage (10) au moins dans la deuxième position, **caractérisé en ce que** les signaux requis pour l'autorisation de conduite peuvent être produits par le dispositif électronique (28), le dispositif électronique (28) produisant des signaux de ce type, qui servent à déclencher des fonctions qui peuvent autrement être activées par une serrure de contact électrique faisant partie intégrante d'un système traditionnel d'autorisation de conduite.

2. Verrouillage de direction électrique selon la revendication 1, **caractérisé en ce que** le dispositif électronique (28) reproduit les signaux de position de clé (35) qui autrement, dans le cas d'un actionnement manuel, sont émis par la serrure de contact au moyen de la clé de contact et/ou le dispositif électronique (28) commande l'entraînement (27) sans les signaux qui seraient émis autrement par la serrure de contact et/ou le dispositif électronique (28) commande l'entraînement (27) de façon autonome en sécurité intrinsèque.

3. Verrouillage de direction électrique selon la revendication 1 ou 2, **caractérisé en ce que** le dispositif électronique (28) et le dispositif (5) possèdent, pour leur actionnement conformément à leur destination, des émetteurs et/ou des récepteurs (24, 17) pour des signaux en particulier électromagnétiques (7) et/ou coopèrent avec des émetteurs et/ou des récepteurs (24), qui se trouvent le cas échéant dans un dispositif de commande distinct, au moins l'un des signaux transmis étant en particulier un signal d'actionnement codé (15) destiné à l'authentification du dispositif (5) de telle sorte qu'après l'analyse positive du signal d'actionnement (15) transmis, l'entraînement (27) est commandé par le dispositif électronique (28) pour déplacer l'élément de blocage (1) dans la position appropriée.

4. Verrouillage de direction électrique selon la revendication 1, 2 ou 3, **caractérisé en ce que** le dispositif électronique (28), le cas échéant avec les émetteurs et/ou récepteurs (24) y afférents, est intégré dans le verrouillage de direction électrique (9).

5. Verrouillage de direction électrique selon l'une des revendications 1 à 4, **caractérisé en ce qu'**une antenne (38, 29) est en liaison avec le verrouillage de direction électrique (9), et le cas échéant intégrée dans le verrouillage de direction électrique (9), en particulier pour commander les signaux à basse fréquence (LF) destinés à sortir le dispositif (5) du mode de veille et/ou à le localiser.

6. Verrouillage de direction électrique selon l'une des revendications 1 à 5, **caractérisé en ce que** l'entraînement (27) présente un moteur électrique, qui est alimenté en tension électrique par la batterie se trouvant dans le véhicule automobile (1).

7. Verrouillage de direction électrique selon l'une des revendications 1 à 6, **caractérisé en ce qu'**un bouton marche/arrêt (11) coopérant avec le dispositif électronique (28) est en liaison avec le verrouillage de direction électrique (9), et en particulier agencé dans l'espace de construction du véhicule automobile (1) dans lequel se trouve autrement le cylindre de fermeture de la serrure de contact.

8. Verrouillage de direction électrique selon l'une des revendications 1 à 7, **caractérisé en ce que** le verrouillage de direction électrique (9) coopère avec un système d'autorisation d'accès, en particulier avec un type de fonctionnalité d'entrée sans clé dans le véhicule automobile (1).
